(19) Europäisches Patentamt / European Patent Office / Office européen des brevets

(11) **EP 2 437 405 A1**

(12) **EUROPEAN PATENT APPLICATION**
published in accordance with Art. 153(4) EPC

(43) Date of publication:
**04.04.2012 Bulletin 2012/14**

(51) Int Cl.:
**H04B 7/04** (2006.01)

(21) Application number: **10780006.2**

(22) Date of filing: **09.03.2010**

(86) International application number:
**PCT/CN2010/070923**

(87) International publication number:
**WO 2010/135924 (02.12.2010 Gazette 2010/48)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **25.05.2009 CN 200910141651**

(71) Applicant: **Fujitsu Limited**
**Kawasaki-shi, Kanagawa 211-8588 (JP)**

(72) Inventors:
• **ZHOU, Hua**
  **Beijing 100025 (CN)**

• **TIAN, Jun**
  **Beijing 100025 (CN)**
• **ZHANG, Jie**
  **Beijing 100025 (CN)**

(74) Representative: **Wilding, Frances Ward et al**
**Haseltine Lake LLP**
**Lincoln House, 5th Floor**
**300 High Holborn**
**London WC1V 7JH (GB)**

(54) **COMMUNICATION DEVICE, COMMUNICATION METHOD AND BASE STATION**

(57) The present invention relates to communication apparatus, communication method and base station. The communication apparatus has a plurality of antennas and is capable of using a Multi-Input Multi-Output (MIMO) technique, comprising: a MIMO mode determining unit configured to determine a MIMO mode to be adopted; a precoding matrix information determining unit configured to determine precoding matrixes according to the determined MIMO mode; a transmitting unit configured to transmit information related to the precoding matrix, wherein, in case the MIMO mode to be adopted is a single-cell multi-user MIMO mode, the precoding matrix information determining unit determines a precoding matrix to be used by a service base station in a cell where the communication apparatus locates to communicate with the communication apparatus, and determines a precoding matrix to be used by the service base station to communicate with other communication apparatus in the cell which is grouped with the communication apparatus.

FIG.5

EP 2 437 405 A1

**Description**

**Technical Field**

The present invention relates to a communication system, and particularly, to a communication system using a MIMO technique.

**Background of the Invention**

In the current wireless communication system, a base station communicates with a plurality of terminals. When there are a plurality of transmitting antennas of the base station and a plurality of receiving antennas of the terminal, quite a few multi-antenna techniques are available and they are generally called as the Multi-Input Multi-Output (MIMO) technique. Based on different usage methods, the MIMO technique may be divided into a Single User MIMO (SU-MIMO) mode, a Multiple User MIMO (MU-MIMO) mode and a Multiple Cell MIMO mode.
Brief descriptions are given as follows.
In case the MIMO technique is adopted between the base station and the terminal, if the base station acquires the information of a channel matrix between the base station and the terminal, an optimum precoding can be carried out, i.e.,

$$X = Ws$$

wherein W is a precoding matrix, s is a signal before the transmission, and x is a signal transmitted to an antenna after being weighted. The signal passing a MIMO channel and received by the terminal is:

$$r = HWs$$

wherein H is the MIMO channel, and if H ideally matches W such that

$$HW = \begin{bmatrix} a & 0 & 0 \\ 0 & ... & 0 \\ 0 & 0 & b \end{bmatrix}$$

a receiver will easily demodulates to obtain s.
But in the actual system, the base station is difficult to acquire H, and then an appropriate W is difficult to be estimated. For this reason, the terminal needs to feed back some simplified channel information. Usually, the base station and the terminal may prestore a precoding codebook known to both parties as follows:

$$C = \{W_1, W_2, ..., W_N\}$$

The codebook includes N precoding matrixes W, and the serial number of each W in the codebook is called as the Precoding Matrix Index (PMI). The terminal itself estimates an appropriate W by measuring the MIMO channel H, and feeds back the serial number of the W in the codebook C to the base station. After acquiring the serial number, the base station can refer to the codebook C to obtain the really required weighted matrix W.
For various MIMO modes, the terminal needs to feed back necessary channel information (e.g., PMI), and how to reduce the feedback overhead is a focus in the current study. During the process of proposing the present invention, the inventor finds that in various MIMO modes, the terminal and the base station make different processing, thus a uniform PMI feedback cannot be carried out.

## Summary of the Invention

The present invention is proposed with respect to the above problem in the prior art, so as to overcome one or more defects existing in the prior art, and provide at least one beneficial choice.

In order to achieve the above object, the present invention provides the following aspects.

Aspect 1: a communication apparatus having a plurality of antennas and capable of using a Multi-Input Multi-Output (MIMO) technique, comprising: a MIMO mode determining unit configured to determine a MIMO mode to be adopted; a precoding matrix information determining unit configured to determine precoding matrixes according to the determined MIMO mode; a transmitting unit configured to transmit information related to the precoding matrix, wherein, wherein when the MIMO mode that shall be used is a single cell multiple user MIMO (MU-MIMO) mode, the precoding matrix information determining unit determines a precoding matrix that should be used during communication between the communication apparatus and a serving base station of a cell where the communication apparatus is located, and a precoding matrix that should be used during communication between the serving base station and other communication apparatus in the cell that can be grouped with the communication apparatus.

Aspect 2: the communication apparatus according to aspect 1, wherein when the MIMO mode that should be used is a multiple base station cooperation MIMO mode, the precoding matrix information determining unit determines a precoding matrix that shall be used during communication between the serving base station and the communication apparatus, and a precoding matrix that should be used during communication between an adjacent base station to the serving base station and other communication apparatus in an adjacent cell that can be grouped with the communication apparatus..

Aspect 3: the communication apparatus according to aspect 1, wherein when the MIMO mode that shall be used is single cell Mulitple user MIMO mode, the precoding matrix information determining unit determines a precoding matrix that should be used during communication between the serving base station and the communication apparatus, in a principle of optimizing the receiving signal quality obtained by the communication apparatus from the serving base station, and determines a precoding matrix that shall be used during communication between the serving base station and other communication apparatus in the cell that can be grouped with the communication apparatus, in a principle of minimizing the receiving signal quality obtained by the communication apparatus from the serving base station.

Aspect 4: the communication apparatus according to aspect 2, wherein in case the MIMO mode that should be adopted is the multiple base station cooperative MIMO mode, the precoding matrix information determining unit determines the precoding matrix to be used by the service base station to communicate with the communication apparatus in a principle of achieving the best quality of a signal obtained by the communication apparatus from the service base station, and determines the precoding matrix to be used by the neighbor base station of the service base station to communicate with other communication apparatus in the neighbor cell which is grouped with the communication apparatus in a principle of achieving the worst quality of the signal obtained by the communication apparatus from the neighbor base station.

Aspect 5: the communication apparatus according to aspect 1 or 2, wherein when the MIMO mode that should be adopted is a single user MIMO mode, the precoding matrix information determining unit determines two or more precoding matrixes to be used by the service base station to communicate with the communication apparatus in a principle of maximizing the capacity or minimizing the error rate.

Aspect 6: the communication apparatus according to aspect 1, wherein the information related to the precoding matrix is the precoding matrix itself or a precoding matrix index.

Aspect 7: the communication apparatus according to aspect 1, wherein the transmitting unit transmits the information related to the precoding matrix of various MIMO modes with a unified format.

Aspect 8: A base station, comprising: a MIMO mode determining unit configured to determine a MIMO mode to be adopted; a notifying unit configured to notify the determined MIMO mode to a terminal served thereby; a receiving unit configured to receive information related to the precoding matrix from the terminal; and a terminal grouping unit configured to group terminals according to the information, sent by the terminal, related to the precoding matrix in case the determined MIMO mode is a single-cell multi-user MIMO mode.

Aspect 9: the base station according to aspect 8, wherein the terminal grouping unit comprises a terminal priority determining unit, a same-priority terminal grouping unit, a judging unit, a sub-priority terminal grouping unit and a sub-prime grouping unit, wherein the terminal priority determining unit determines the priority of a terminal; the same-priority terminal grouping unit determines a terminal grouped with the cared terminal from terminals of the same priority; the judging unit judges whether a grouped terminal is found; when the judging unit judges that the terminal grouped with the cared terminal is not found by the same-priority terminal grouping unit, the sub-priority terminal grouping unit searches a terminal grouped with the cared terminal from terminals of the sub-priority; and when the judging unit judges that the terminal grouped with the cared terminal is not found by the sub-priority terminal grouping unit, the sub-prime grouping unit performs a sub-prime grouping.

Aspect 10: a communication method used in a communication apparatus served by a base station, comprising:

determining a MIMO mode that should be adopted; determining precoding matrixes according to the determined MIMO mode; transmitting information related to the precoding matrix, wherein when the MIMO mode that should be used is a single cell MU-MIMO mode, determining a precoding matrix that should be used during communication between the communication apparatus and a serving base station of a cell where the communication apparatus is located, and a precoding matrix that should be used during communication between the serving base station and other communication apparatus in the cell that can be grouped with the communication apparatus.

Aspect 11: a base station, comprising:

a receiving unit configured to receive information related to a precoding matrix from another base station; and a terminal grouping unit configured to group terminals according to the information related to the precoding matrix.

Aspect 12: a communication apparatus having a plurality of antennas and capable of using a MIMO technique, comprising: a MIMO mode determining unit configured to determine a MIMO mode to be adopted; a precoding matrix information determining unit configured to determine precoding matrixes according to the determined MIMO mode; a transmitting unit configured to transmit information related to the precoding matrixes, wherein, the precoding matrix information determining unit determines a plurality of precoding matrixes related to the MIMO mode determined by the precoding matrix information determining unit, and the transmitting unit transmits the information related to the plurality of precoding matrixes in a same message format regardless of the MIMO mode determined by the precoding matrix information determining unit.

Aspect 13: the communication apparatus according to aspect 12, wherein in case the MIMO mode that should be adopted is a single-cell multi-user MIMO mode, the precoding matrix information determining unit determines a precoding matrix to be used by a service base station in a cell where the communication apparatus locates to communicate with the communication apparatus, and determines a precoding matrix to be used by the service base station to communicate with other communication apparatus in the cell which is grouped with the communication apparatus.

Aspect 14: the communication apparatus according to aspect 12, wherein in case the MIMO mode that should be adopted is a multiple base station cooperative MIMO mode, the precoding matrix information determining unit determines a precoding matrix to be used by the service base station to communicate with the communication apparatus, and determines a precoding matrix to be used by a neighbor base station of the service base station to communicate with other communication apparatus in a neighbor cell which is grouped with the communication apparatus.

Aspect 15: the communication apparatus according to aspect 12, wherein in case the MIMO mode that should be adopted is a single user MIMO mode, the precoding matrix information determining unit determines two or more precoding matrixes to be used by the service base station to communicate with the communication apparatus in a principle of maximizing the capacity or minimizing the error rate.

Aspect 16: a communication apparatus having a plurality of antennas and capable of using a MIMO technique, comprising: a MIMO mode determining unit configured to determine a MIMO mode to be adopted; a precoding matrix information determining unit configured to determine precoding matrixes according to the determined MIMO mode; a transmitting unit configured to transmit information related to the precoding matrix, wherein in case the MIMO mode that should be adopted is a multiple base station cooperative MIMO mode, the precoding matrix information determining unit determines a precoding matrix to be used by the service base station to communicate with the communication apparatus, and determines a precoding matrix to be used by a neighbor base station of the service base station to communicate with other communication apparatus in a neighbor cell which is grouped with the communication apparatus.

According to the embodiments of the present invention, a unified feedback signaling may be designed to simplify the processing at the terminal.

According to the embodiments of the present invention, the terminal feeds back two or more PMI information regardless of the MIMO mode, so that the base station can more conveniently control the interferences among users when scheduling the users.

With reference to the following descriptions and drawings, these and further aspects and features of the present invention will be clearer. The descriptions and drawings concretely disclose the specific embodiments of the present invention, and specify the principle of the invention and the ways that can be adopted. It shall be appreciated that the scope of the present invention is not limited thereby. Within the scope of the spirit and provisions of the accompanied claims, the present invention includes various changes, modifications and equivalents.

Features described and/or illustrated with respect to one embodiment can be used in one or more other embodiments in a same or similar way, and/or combine with or replace features in other embodiments.

To be noted, the term "include/comprise/have" herein refers to existence of feature, component, step and assembly, not excluding existence or addition of one or more other features, components, steps, assemblies or a combination thereof.

## Brief Description of the Drawings

The drawings illustrate the preferred embodiments of the present invention and constitute a part of the Specification. The drawings detailedly elaborate the principle of the present invention together with the literal descriptions, in which:

Fig. 1 schematically illustrates a processing by a communication system according to an embodiment of the present invention in an SU-MIMO mode;
Fig. 2 schematically illustrates a processing by a communication system according to an embodiment of the present invention in an MU-MIMO mode;
Fig. 3 schematically illustrates a processing by a communication system according to an embodiment of the present invention in a Multiple Cell MIMO mode;
Fig. 4 schematically illustrates a principle of terminal matching according to an embodiment of the present invention;
Fig. 5 schematically illustrates an example of a structure of a terminal according to an embodiment of the present invention;
Fig. 6 schematically illustrates an example of a structure of a base station according to an embodiment of the present invention;
Fig. 7 schematically illustrates a processing by a terminal grouping unit, e.g., matching two terminals, according to another embodiment of the present invention;
Fig. 8 illustrates a schematic structural diagram of a terminal grouping unit 64 of a base station according to the above embodiment; and
Fig. 9 illustrates a schematic structural diagram of a neighbor base station according to an embodiment of the present invention.

**Detailed Description of the Preferred Embodiments**

With reference to the drawings, the processings by the communication system according to the embodiments of the present invention in various MIMO modes being schematically described as follows.

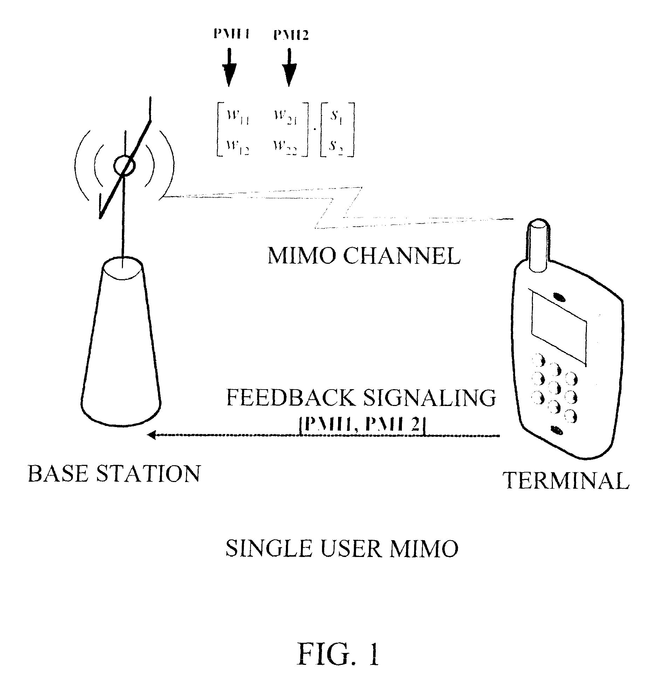

Fig. 1 schematically illustrates a processing by a communication system according to an embodiment of the present invention in an SU-MIMO mode.
In the SU-MIMO mode, the base station transmits multi-channel signals to a certain user by using the same physical resource. In order to ensure that the terminal can distinguish the multi-channel signals, the base station needs to weights the multi-channel signals respectively, during a transmission thereof. The weighting matrix is a certain code matrix in a codebook known to the base station and the terminal. As illustrated in Fig. 1, according to the embodiment of the present invention, the terminal feeds back two or more PMI each corresponding to a data stream. Under this condition, the precoding matrix is simplified into precoding vector. When the terminal selects the PMI to be transmitted, the principle is to maximize the capacity, or minimize the error rate, etc. The base station weights the transmitted data stream according to the PMI fed back.

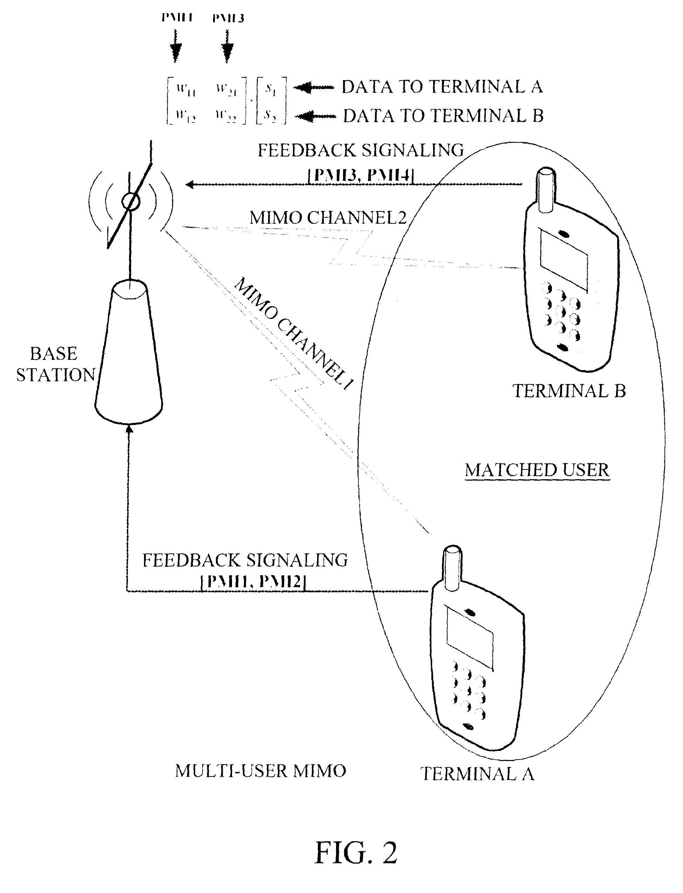

Fig. 2 schematically illustrates a processing by a communication system according to an embodiment of the present invention in an MU-MIMO mode.
In the MU-MIMO mode, the base station transmits signals to a plurality of users by using the same physical resource. In order to avoid signal interferences among the users, the base station needs to adopt a PMI matching (grouping) method. As illustrated in Fig. 2, according to the embodiment of the present invention, each terminal feeds back two or more PMI (two PMI in the drawing), in which one PMI is expected to be used by a terminal performing the feedback itself, and other PMI to be used by the user matched with the terminal. Although the drawing only illustrates two terminals, there may be more.
In an embodiment, the PMI may be selected according the following equation:

$$w_1^k = \arg\max_{i \in \{1,\dots,L\}} \left( \frac{\left\| H^k w_i \right\|^2}{\sigma^2} \right)$$

$$w_2^k = \arg\min_{i \in \{1,\dots,L\}} \left( \frac{\left\| H^k w_i \right\|^2}{\sigma^2} \right)$$

In which, $H^k$ is a channel matrix from the base station to a user k and w is a codeword in the codebook with its index in the codebook being briefed as PMI, wherein PMI1 maximizes the SNR and PMI2 minimizes the SNR.

Two users are adopted as an example to describe how to perform a matching (grouping). In case terminal 1 feeds back PM11 and PMI2 while terminal 2 feeds back PM13 and PM14, when the PMI (PMI1) used by terminal 1 is just PM14 expected by terminal 2 to be used by terminal 1 and PMI3 used by terminal 2 is just the PMI (PMI2) expected by terminal 1 to be used by terminal 2, the two users are completely matched with each other.

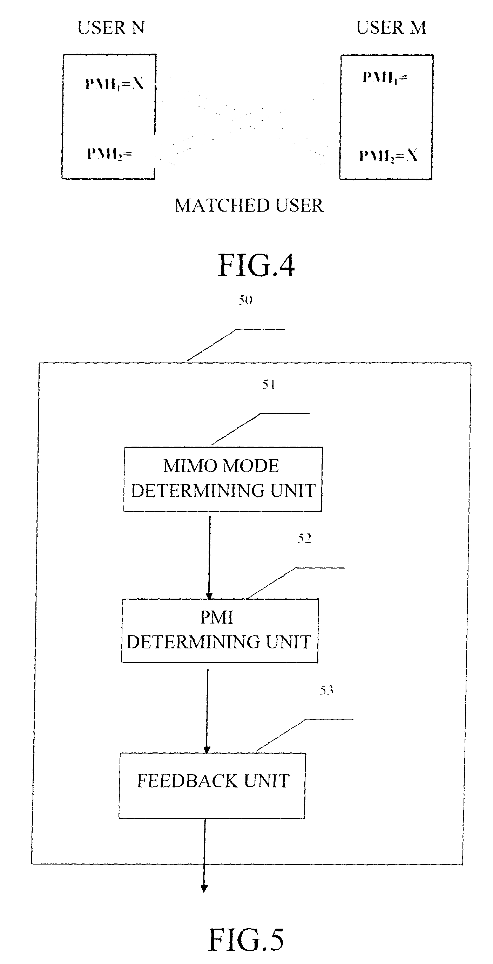

Fig. 4 schematically illustrates a principle of terminal matching according to an embodiment of the present invention. As illustrated in Fig. 4, a user N feed back two PMI corresponding to the best SNR and the worst SNR, respectively. The PMI corresponding to the best SNR is called as the best PMI, and the PMI corresponding to the worst SNR is called as the worst PMI.

The best PMI1=X and the worst PMI2=Y Another user feeds back two PMI, in which the best PMI1=Y and the worst PMI2=X. Thus the two users are matched with each other, the best PMI of user N is corresponding to the worst PMI of the user M, while the worst PMI of the user N is corresponding to the best PMI of user M.

Other matching principle may be partially matching according to the terminal priority. For example, when terminal 1 has a higher priority, PMI3 used by terminal 2 is required to be PMI2 expected by terminal 1 to be used by terminal 2, while it is not specified whether PMI1 used by terminal 1 is PMI4 expected by terminal 2 to be used by terminal 1, as illustrated in Fig. 2. When there are more than two PMI, the PMI other than PMI1 shall be the PMI expected by the terminal to be used by the matched terminal, and there may be a plurality of terminals in the group.

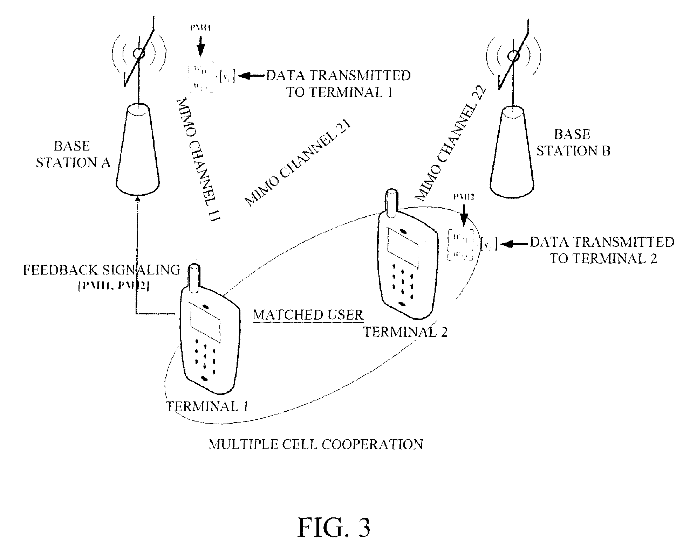

Fig. 3 schematically illustrates a processing by a communication system according to an embodiment of the present invention in a Multiple Cell MIMO mode.

In the Multiple Cell MIMO mode, a plurality of base stations transmit signals to a plurality of users in different cells by using the same physical resource. In order to avoid signal interferences among the users occupying the same physical resource in the cells, the base stations need to adopt a PMI matching (grouping) method. In the embodiment of the present invention, each terminal feeds back two or more PMI, wherein one PMI (e.g., PMI1) is a precoding matrix, expected by the terminal, to be used by a base station (also called as cell base station or service base station) in a cell (service cell) where the terminal locates for weighting a signal transmitted to the terminal, and other PMI (e.g., PMI2) is a precoding matrix, expected by the terminal, to be used by a base station (also called as neighbor base station) in a neighbor cell for weighting the transmitted signal in the physical resource the same as that of the service cell.

For example, the terminal may select the PMI according to the following equation:

$$w_1^k = \arg\max_{i \in \{1,\ldots,L\}} \left( \frac{\left\| H_1^k w_i \right\|^2}{\sigma^2} \right)$$

$$w_2^k = \arg\min_{i \in \{1,\ldots,L\}} \left( \frac{\left\| H_2^k w_i \right\|^2}{\sigma^2} \right)$$

$H1^k$ is a MIMO channel matrix from the service base station to the user k, $H2^k$ is a MIMO channel from a neighbor base station to the user k, while w1 and w2 are the best PMI from the service base station to the user and the worst PMI from the neighbor base station to the user, respectively. The matching principle is slightly different from that of the single-cell multi-user MIMO matching. For example, after the terminal feeds back two PMI to the cell base station, the cell base station transmits the PMI (e.g., PMI2), which is expected by the user to be used by a neighbor cell user, to the neighbor base station. The neighbor base station finds from its cell a user expecting to use PMI2, so as to match this user with the user in the original cell.

When there are more than two PMI, then the PMI other than PMI1 constitute a precoding matrix set for weighting expected by the terminal to be used by a base station of other neighbor cell during a signal transmission in the physical resource the same as that of the cell where the terminal locates.

As mentioned above, the feedback of PMI shall be carried out in various MIMO modes. According to the embodiments of the present invention, the terminal feeds back two or more PMI in any MIMO mode, thus a uniform feedback format may be designed, and the terminal needs not to adjust the format of the feedback information according to different MIMO modes.

For example, the base station may adopt the PMI feedback format as shown in the following table.

Table 1

| Type of feedback information | Implication | Number of bytes |
|---|---|---|
| ... | ... | ... |
| PMI report1 | Determined according to MIMO mode | |
| PMI report2 | Determined according to MIMO mode | |
| ... | ... | ... |

PMI report1 and PMI report2 are PMI information required by various MIMO modes. When such feedback format is used, PMI report1 and PMI report2 have different implications for different MIMO modes. For example, for the SU-MIMO mode, PMI report1 and PMI report2 are precoding matrixes transmitted to two streams of the user, respectively. For the MU-MIMO mode, PMI report1 and PMI report2 are the PMI used by the user itself and the PMI expected to be used by a matched user. For the Multiple Cell MIMO mode, PMI report1 and PMI report2 are the PMI used by the user itself and the PMI expected to be used by a matched user in a neighbor cell.

Thus, through the PMI feedback of a uniform format, the terminal may transmit various PMI feedbacks to the base station in the same feedback format, so as to realize a purpose of simplifying the feedback signaling overhead.

In addition, the terminal may feed back more than two PMI so as to unify the PMI feedbacks of various MIMO mode. For example, for the SU-MIMO mode, more than two PMI may be used to transmit precoding weights more than two data streams to the user. For the MU-MIMO mode, more than two PMI may be used to group terminals, and the PMI fed back by each terminal, except the first PMI, is the PMI expected by the terminal to be used by the matched terminal. For the Multiple Cell MIMO mode, more than two PMI may be used to group terminals of cells, and the PMI fed back by each terminal, except the first PMI, is the PMI expected by the terminal to be used by the matched terminal in other cell.

With reference to the drawings, the base station and terminal in the communication system according to the embodiment of the invention are detailedly described as follows.

Fig. 5 schematically illustrates an example of a structure of a terminal according to an embodiment of the present invention. As illustrated in Fig. 5, according to the embodiment of the present invention, the terminal 50 includes a MIMO mode determining unit 51, a PMI determining unit 52 and a feedback unit 53.

The MIMO mode determining unit 51 is configured to determine a MIMO mode adopted by a mobile terminal. The MIMO mode determining unit 51 may receive an instruction indicating a MIMO mode from the base station, and determine the MIMO mode to be adopted according to the instruction. Further, the MIMO mode determining unit 51 may determine the MIMO mode to be adopted according to the quality of a channel with the cell base station of the cell where the MIMO mode determining unit 51 locates, or the quality of a channel with the neighbor base station, notify the cell base station of the determined MIMO mode, and wait for a confirmation from the base station. In an alternative embodiment, a confirmation from the base station is not required.

The PMI determining unit 52 determines the PMI to be fed back according to the determined MIMO mode. In details, for the single user MIMO mode, the PMI determining unit 52 determines the PMI used by two data streams (or more data streams when there are more than two PMI) of the single user. For the MU-MIMO mode and the Multiple Cell MIMO mode, the PMI determining unit 52 determines the PMI expected to be used by the terminal itself, and the PMI expected to be used by the grouped user.

The feedback unit 53 is configured to feed back the PMI determined by the PMI determining unit 52 to the cell base station. As mentioned above, the feedback unit 53 may feed back PMI information in various MIMO modes with a unified format.

The MIMO mode determining unit 51 and the PMI determining unit 52 may be implemented by a processor, a FPGA (Field Programmable Gate Array), an ASIC (Application Specific integrated circuit) or a DSP (Digital Signal Processor).

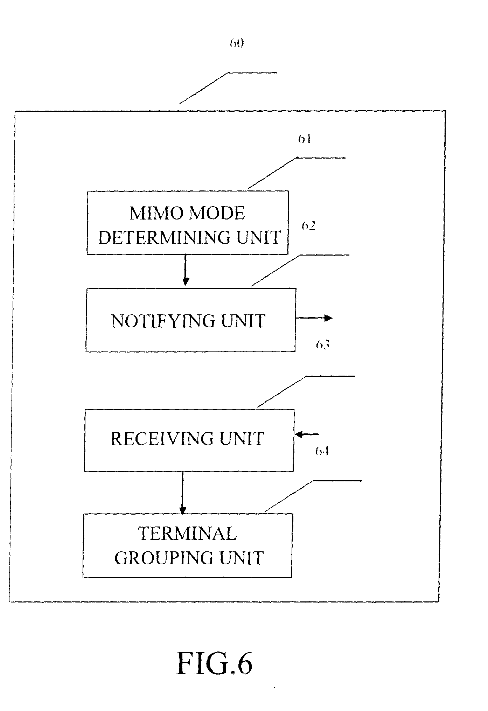

Fig. 6 schematically illustrates an example of a structure of a base station according to an embodiment of the present invention. As illustrated in Fig. 6, according to the embodiment of the invention, a base station 60 includes a MIMO mode determining unit 61, a notifying unit 62, a receiving unit 63 and a terminal grouping unit 64.

The MIMO mode determining unit 61 determines a MIMO mode to be adopted. In details, the MIMO mode to be adopted may be determined according to information of a channel between the base station and a terminal served thereby, or position information of the terminal, etc. For example, when the terminal is located at the central area of a service zone of the base station, the SU-MIMO mode will be adopted; when the terminal is located at the central area of the base station, the MU-MIMO mode will be adopted; and when the terminal is located at the edge area of the base station, the Multiple Cell MIMO mode will be adopted. In addition, for example when the quality of the channel between the base station and the terminal served thereby is better than a first threshold, the SU-MIMO mode will be adopted; when the quality of the channel between the base station and the terminal served thereby is worse than the first threshold but better than a second threshold, the MU-MIMO mode will be adopted; when the quality of the channel is worse than the second threshold, the Multiple Cell MIMO mode will be adopted. In addition, the terminal may also determine the MIMO mode to be adopted, and send a request that requires using the determined MIMO mode to the base station.

The notifying unit 62 notifies the determined MIMO mode to the terminal. In addition, when the Multiple Cell MIMO mode is adopted, the notifying unit 62 further notifies PMI information received from the terminal to the neighbor base station.

The receiving unit 63 receives the PMI information from the terminal. As mentioned above, the received PMI information is transmitted by the terminal with a unified format, and the implication thereof varies with the MIMO mode. In the MU-MIMO mode, the PMI information includes the PMI expected by the terminal to be used by the base station in a communication between the base station and the terminal, and the PMI expected by the terminal to be used by the base station in a communication between the base station and other communication apparatus grouped with the terminal.

In the MU-MIMO mode, the terminal grouping unit 64 determines a terminal to be grouped according to the PMI information transmitted from respective terminals.

According an embodiment, for example of matching two terminals, the terminal grouping unit 64 searches a second terminal with PMI4 the same as PMI1 and PMI3 the same as PMI2, according to PMI1 and PMI2 transmitted from the first terminal as well as PMI3 and PMI4 transmitted from the second terminal, so as to determine a second terminal matched (grouped) with the first terminal.

Similarly, a plurality of terminals may be grouped.

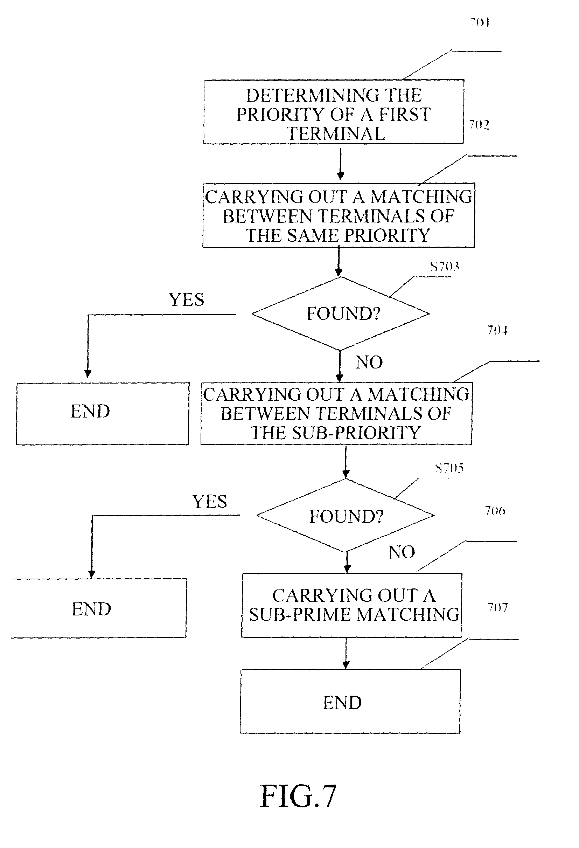

Fig. 7 illustrates a processing by a terminal grouping unit, e.g., matching two terminals, according to another embodiment of the present invention. As illustrated in Fig. 7, according to another embodiment of the present invention, the priority of a first terminal is firstly determined (step 701). The priority of the terminal is predetermined according to the service protocol or the nature of data to be transmitted. For example when data of a high real-time requirement (e.g., video data or voice data) is transmitted to or from the terminal, it is determined that the terminal has a high priority, or when data not of a high real-time requirement (e.g., EMAIL data) is transmitted, it is determined that the terminal has a low priority.

Next, in step 702, a matching is carried out between terminals of the same priority, i.e., searching a second terminal with PMI4 the same as PMI1 and PMI3 the same as PMI2, according to PMI1 and PMI2 transmitted from the first terminal as well as PMI3 and PMI4 transmitted from the second terminal of the same priority, so as to determine a second terminal matched (grouped) with the first terminal.

If the matched second terminal is found (step 703, Yes), the processing is ended. On the other hand, when the matched second terminal is not found (step 703, No), a matching will be carried out between terminals of the sub-priority in step 704, i.e., searching a second terminal with PMI4 the same as PMI1 and PMI3 the same as PMI2, according to PMI1 and PMI2 transmitted from the first terminal as well as PMI3 and PMI4 transmitted from the second terminal of the sub-priority, so as to determine a second terminal matched (grouped) with the first terminal.

If the matched second terminal is found (step 705, Yes), the processing is ended. On the other hand, when the matched second terminal is not found (step 705, No), a sub-prime matching will be carried out between terminals of the sub-priority in step 706, i.e., searching a second terminal with PMI3 the same as PMI2, according to PMI1 and PMI2 transmitted from the first terminal as well as PMI3 and PMI4 transmitted from the second terminal of the sub-priority, so as to determine a second terminal matched (grouped) with the first terminal (sub-prime grouping). This processing is ended in step 707.

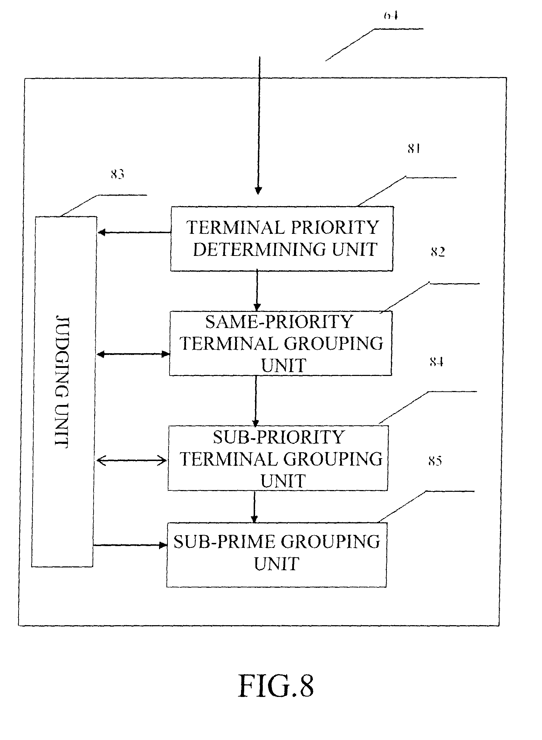

Fig. 8 illustrates a schematic structural diagram of a terminal grouping unit 64 of a base station according to the above embodiment.

As illustrated in Fig. 8, the terminal grouping unit 64 includes a terminal priority determining unit 81, a same-priority terminal grouping unit 82, a judging unit 83, a sub-priority terminal grouping unit 84, and a sub-prime grouping unit 85.

The terminal priority determining unit 81 determines the priority of a terminal. The same-priority terminal grouping unit 82 determines a terminal grouped with the cared terminal from terminals of the same priority. The judging unit 83 judges whether a grouped terminal is found. When the judging unit 83 judges that no grouped terminal is found by the same-priority terminal grouping unit 82, the sub-priority terminal grouping unit 84 searches a terminal grouped with the cared terminal from terminals of the sub-priority. When the judging unit 83 judges that no grouped terminal is found by the sub-priority terminal grouping unit 84, the sub-prime grouping unit 85 performs a sub-prime grouping.

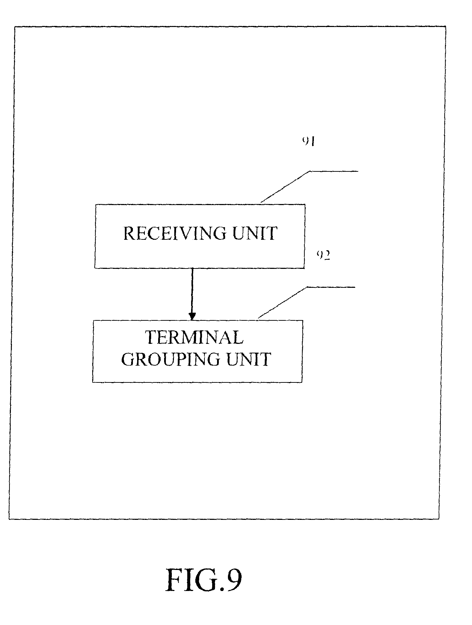

Fig. 9 illustrates a schematic structural diagram of a neighbor base station according to an embodiment of the present invention. As illustrated in Fig. 9, the neighbor base station according to the embodiment of the present invention includes a receiving unit 91 and a terminal grouping unit 92. The receiving unit 91 receives the PMI information from the aforementioned cell base station. The terminal grouping unit 92 performs a terminal grouping, and the processing is the same as that made by the terminal grouping unit 64, herein is not repeated.

The MIMO mode determining unit 61 and the terminal grouping unit 64, 92 may be implemented by a processor, a FPGA (Field Programmable Gate Array), an ASIC (Application Specific integrated circuit) or a DSP (Digital Signal Processor).

By designing a uniform feedback signaling, the base station can better control the interferences among users when dispatching a plurality of users, so as to improve the system throughput.

The communication system adaptable to the present invention may be any multi- access system or broadcast/multicast/unicast system, and may be based on any multi- access technique, e.g., OFDMA, CDMA, TDMA, etc.

The above apparatus and method of the present invention may be implemented by hardware, or a combination of hardware and software. The present invention relates to such a computer readable program that enables a logic part to implement the previously described apparatuses or components, or implement the previously described methods or steps, when the program is executed by the logic part. The present invention also relates to storage medium for storing the above program, e.g., hard disk, magnetic disk, optical disk, DVD and flash memory.

The present invention is described in conjunction with the above detailed embodiments. But a person skilled in the art shall be appreciated that the descriptions are just exemplary, instead of limitations to the protection scope of the present invention. A person skilled in the art can make various modifications and changes to the present invention based on spirit and principle of the present invention, and those modifications and changes are also within the scope of the present invention.

## Claims

1. A communication apparatus that has a plurality of antennas and can use the multi-input multi-output (MIMO) technique, comprising:

   a MIMO mode determining unit for determining a MIMO mode that should be used;
   a precoding matrix information determining unit for determining a precoding matrix based on the determined MIMO mode;
   a transmitting unit for transmitting information related to the precoding matrix,
   wherein when the MIMO mode that should be used is a single cell multiple user MIMO (MU-MIMO) mode, the precoding matrix information determining unit determines a precoding matrix that should be used during communication between the communication apparatus and a serving base station of a cell where the communication apparatus is located, and a precoding matrix that should be used during communication between the serving base station and other communication apparatus in the cell that can be grouped with the communication apparatus.

2. The communication apparatus according to claim 1, wherein, when the MIMO mode that should be used is a multiple base station cooperation MIMO mode, the precoding matrix information determining unit determines a precoding matrix that should be used during communication between the serving base station and the communication apparatus, and a precoding matrix that should be used during communication between an adjacent base station to the serving base station and other communication apparatus in an adjacent cell that can be grouped with the communication apparatus.

3. The communication apparatus according to claim 1, wherein, when the MIMO mode that should be used is single cell Mulitple user MIMO mode, the precoding matrix information determining unit determines a precoding matrix that should be used during communication between the serving base station and the communication apparatus, in a principle of optimizing the receiving signal quality obtained by the communication apparatus from the serving base station, and determines a precoding matrix that should be used during communication between the serving base station and other communication apparatus in the cell that can be grouped with the communication apparatus, in a principle of minimizing the receiving signal quality obtained by the communication apparatus from the serving base station.

4. The communication apparatus according to claim 2, wherein, when the MIMO mode that should be used is Multiple base station cooperation MIMO mode, the precoding matrix information determining unit determines a precoding matrix that should be used during communication between the serving base station and the communication apparatus, in a principle of optimizing the quality of signal received by the communication apparatus from the serving base station, and determines a precoding matrix that should be used during communication between the adjacent base station and other communication apparatus in the adjacent cell that can be grouped with the communication apparatus, in a principle of minimizing the SNR of a signal obtained by the communication apparatus from the adjacent base station.

5. The communication apparatus according to claim 1 or 2, wherein, when the MIMO mode that should be used is a single user MIMO (SU-MIMO) mode, the precoding matrix information determining unit determines two or more precoding matrixes that should be used during communication between the serving base station and the communication apparatus, in a principle of capacity maximization or error rate minimization.

6. The communication apparatus according to claim 1, wherein, the information related to the precoding matrix is the precoding matrix or a precoding matrix index (PMI).

7. The communication apparatus according to claim 1, wherein, the transmitting unit transmits information of various MIMO modes and related to the precoding matrix using a unified format.

8. A base station, comprising:

   a MIMO mode determining unit for determining a MIMO mode that should be used;
   a notifying unit for notifying the determined MIMO mode to a terminal for which the base station serves;
   a receiving unit for receiving, from the terminal, information related to a precoding matrix; and a terminal grouping unit for grouping terminals based on the information related to the precoding matrix from the terminal, when the determined MIMO mode is a MU-MIMO mode.

9. The base station according to claim 8, wherein, the terminal grouping unit comprising: a terminal priority determining unit, a same-priority terminal grouping unit, a judging unit, a sub-priority terminal grouping unit, and a sub-prime grouping unit,
   the terminal priority determining unit determines the priority of an interested terminal;
   the same-priority terminal grouping unit determines terminals grouping with the interested terminal from terminals having the same priority as that of the interested terminal;
   the judging unit judges whether a terminal for grouping has been found;
   the sub-priority terminal grouping unit searches terminals grouping with the interested terminal from terminals having lower priority than that of the interested terminal, when the judging unit judges that no terminal grouping with the interested terminal is found in the terminals having the same priority;
   the sub-prime grouping unit performs a sub-prime grouping when the judging unit judges that no terminal grouping with the interested terminal is found in the terminals having lower priority.

10. A communication method used in a communication apparatus that receives the service of base station, comprising:

    determining a MIMO mode that should be used;
    determining a precoding matrix based on the determined MIMO mode;
    transmitting information related to the precoding matrix,
    wherein when the MIMO mode that should be used is a single cell MU-MIMO mode,
    determining a precoding matrix that should be used during communication between the communication apparatus and a serving base station of a cell where the communication apparatus is located, and a precoding matrix that should be used during communication between the serving base station and other communication apparatus in the cell that can be grouped with the communication apparatus.

PMI1 PMI2

$$\begin{bmatrix} w_{11} & w_{21} \\ w_{12} & w_{22} \end{bmatrix} \cdot \begin{bmatrix} s_1 \\ s_2 \end{bmatrix}$$

MIMO CHANNEL

FEEDBACK SIGNALING
[PMI1, PMI 2]

BASE STATION

TERMINAL

SINGLE USER MIMO

FIG. 1

PMI1   PMI3

↓      ↓

$$\begin{bmatrix} w_{11} & w_{21} \\ w_{12} & w_{22} \end{bmatrix} \cdot \begin{bmatrix} s_1 \\ s_2 \end{bmatrix} \longleftarrow \text{DATA TO TERMINAL A}$$
$\longleftarrow$ DATA TO TERMINAL B

FEEDBACK SIGNALING
[PMI3, PMI4]

MIMO CHANNEL2

MIMO CHANNEL1

BASE
STATION

TERMINAL B

MATCHED USER

FEEDBACK SIGNALING
[PMI1, PMI2]

MULTI-USER MIMO          TERMINAL A

FIG. 2

FIG. 3

USER N                                    USER M

$PMI_1 = X$                                      $PMI_1 =$

$PMI_2 =$                                       $PMI_2 = X$

MATCHED USER

# FIG.4

50

51

MIMO MODE
DETERMINING UNIT

52

PMI
DETERMINING UNIT

53

FEEDBACK UNIT

# FIG.5

60

61

MIMO MODE
DETERMINING UNIT

62

NOTIFYING UNIT

63

RECEIVING UNIT

64

TERMINAL
GROUPING UNIT

FIG.6

701

DETERMINING THE
PRIORITY OF A FIRST
TERMINAL

702

CARRYING OUT A MATCHING
BETWEEN TERMINALS OF
THE SAME PRIORITY

S703

FOUND?

YES

END

NO

704

CARRYING OUT A MATCHING
BETWEEN TERMINALS OF
THE SUB-PRIORITY

S705

FOUND?

706

YES

END

NO

CARRYING OUT A
SUB-PRIME MATCHING

707

END

FIG.7

64

83

81

TERMINAL PRIORITY
DETERMINING UNIT

82

SAME-PRIORITY
TERMINAL GROUPING
UNIT

84

JUDGING UNIT

SUB-PRIORITY
TERMINAL GROUPING
UNIT

85

SUB-PRIME GROUPING
UNIT

# FIG.8

FIG.9

# INTERNATIONAL SEARCH REPORT

| | International application No. |
|---|---|
| | PCT/CN2010/070923 |

**A. CLASSIFICATION OF SUBJECT MATTER**

H04B7/04(2006.01)i

According to International Patent Classification (IPC) or to both national classification and IPC

**B. FIELDS SEARCHED**

Minimum documentation searched (classification system followed by classification symbols)

IPC: H04B7/04, H04B7/06, H04L1/00, H04L1/06, H04L25/03, H04B1/707, H04B7/26, H04Q7/38

Documentation searched other than minimum documentation to the extent that such documents are included in the fields searched

Electronic data base consulted during the international search (name of data base and, where practicable, search terms used)

WPI;EPODOC;CPRS;CNKI: multi-input multi-output, multiple, MIMO, matrix, matrixes, matrices, PMI, base station, Node B, service, pair, match, group

**C. DOCUMENTS CONSIDERED TO BE RELEVANT**

| Category* | Citation of document, with indication, where appropriate, of the relevant passages | Relevant to claim No. |
|---|---|---|
| PA | CN101621357A(ALCATEL SHANGHAI BELL CO LTD) 06 Jan. 2010(06.01.2010) the whole document | 1-10 |
| A | WO2008156067A1(NTT DOCOMO INC et al.) 24 Dec. 2008(24.12.2008) abstract, description paragraphs 18-73 | 1-10 |
| A | CN101222267A(ZTE CORP) 16 Jul. 2008(16.07.2008) the whole document | 1-10 |
| A | CN101272364A(ZTE CORP) 24 Sep. 2008(24.09.2008) the whole document | 1-10 |
| A | CN101383645A(ZTE CORP) 11 Mar. 2009(11.03.2009) the whole document | 1-10 |
| A | US2008260059A1(INTERDIGITAL TECH CORP) 23 Oct. 2008(23.10.2008) the whole document | 1-10 |

☐ Further documents are listed in the continuation of Box C.   ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim (S) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 31 May 2010(31.05.2010) | **17 Jun. 2010 (17.06.2010)** |

| Name and mailing address of the ISA/CN The State Intellectual Property Office, the P.R.China 6 Xitucheng Rd., Jimen Bridge, Haidian District, Beijing, China 100088 Facsimile No. 86-10-62019451 | Authorized officer **SHEN,Li** Telephone No. (86-10)62411421 |
|---|---|

Form PCT/ISA /210 (second sheet) (July 2009)

## INTERNATIONAL SEARCH REPORT
Information on patent family members

| International application No. |
| --- |
| PCT/CN2010/070923 |

| Patent Documents referred in the Report | Publication Date | Patent Family | Publication Date |
| --- | --- | --- | --- |
| CN101621357A | 06.01.2010 | None | |
| WO2008156067A1 | 24.12.2008 | EP2169845A1 | 31.03.2010 |
| | | CN101682382A | 24.03.2010 |
| | | JP2009004921A | 08.01.2009 |
| CN101222267A | 16.07.2008 | None | |
| CN101272364A | 24.09.2008 | None | |
| CN101383645A | 11.03.2009 | None | |
| US2008260059A1 | 23.10.2008 | WO2008131352A1 | 30.10.2008 |
| | | AU2008242610A1 | 30.10.2008 |
| | | KR20090130206A | 18.12.2009 |
| | | EP2147516A1 | 27.01.2010 |
| | | AR066220A1 | 05.08.2009 |
| | | CA2684874A1 | 30.10.2008 |
| | | CN101689962A | 31.03.2010 |
| | | KR20100017117A | 16.02.2010 |
| | | MX2009011299A | 14.01.2010 |
| | | TW200847709A | 01.12.2008 |